(19) Europäisches Patentamt
European Patent Office
Office européen des brevets

(11) **EP 4 383 843 A1**

(12) **EUROPEAN PATENT APPLICATION**

(43) Date of publication:
**12.06.2024 Bulletin 2024/24**

(21) Application number: **23211915.6**

(22) Date of filing: **24.11.2023**

(51) International Patent Classification (IPC):
**H04W 52/24** (2009.01)     **H04W 52/14** (2009.01)
**H04W 52/36** (2009.01)

(52) Cooperative Patent Classification (CPC):
**H04W 52/248; H04W 52/146; H04W 52/367**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.12.2022 PCT/IB2022/061905**

(71) Applicant: **Nokia Solutions and Networks Oy
02610 Espoo (FI)**

(72) Inventors:
• JALILI, Feridoon
  **Gistrup (DK)**
• NIELSEN, Kim
  **Storvorde (DK)**

(74) Representative: **Nokia EPO representatives
Nokia Technologies Oy
Karakaari 7
02610 Espoo (FI)**

(54) **NETWORK CONTROL OF SENSITIVITY DEGRADATION**

(57)    A method includes, in response to determining that a terminal connected to a network is configured to transmit using a first value of an uplink power being equal to a first value of the maximum power, the first value of the maximum power for the terminal being configured by the network, monitoring whether a reception quality of the terminal is greater than a predefined threshold, cal-
culating a second value of the maximum power by adding a predefined increment to the first value of the maximum power in response to the reception quality of the terminal being greater than the predefined threshold, and configuring the terminal with the second value of the maximum power in response to the reception quality of the terminal being greater than the predefined threshold.

FIG. 4

**Description**

**FIELD OF THE INVENTION**

The present disclosure relates to carrier aggregation and dual connectivity.

**BACKGROUND**

A carrier aggregation (CA) technique in wireless communication permits increasing a data rate of a given user equipment (UE) by assigning to that UE two or more frequency blocks, also referred to as component carriers, of a given radio cell. A dual connectivity (DC) technique provides aggregation of two radio links or cells (e.g., such as LTE and/or NR links or cells), where a macro cell (also referred to as a master eNB, or MeNB) may serve as mobility and signaling anchor for the UE and a small cell (also referred to as secondary eNB, or SeNB) may serve to boost capacity and provide additional radio resources for the UE. Example types of dual connectivity include Evolved Universal Terrestrial Radio Access Network (E-UTRAN) New Radio Dual Connectivity (EN-DC) and New Radio-New Radio Dual Connectivity (NR-DC).

**SUMMARY**

According to a first aspect of the disclosure, there is provided an apparatus comprising: one or more processors, and memory storing instructions that, when executed by the one or more processors, cause the apparatus to perform: checking whether a terminal being connected to a network is configured to transmit with a first value of an uplink power being equal to a first value of a maximum power, wherein the first value of the maximum power for the terminal is configured by the network, and the maximum power is an upper limitation of the uplink power; monitoring whether a reception quality of the terminal is greater than a predefined threshold if the terminal is configured to transmit with the first value of the uplink power being equal to the first value of the maximum power; calculating a second value of the maximum power by adding a predefined increment to the first value of the maximum power if the reception quality of the terminal is greater than the predefined threshold; and configuring the terminal with the second value of the maximum power if the reception quality of the terminal is greater than the predefined threshold.

The instructions, when executed by the one or more processors, may further cause the apparatus to perform storing, if the second value of the maximum power is calculated, the second value of the maximum power as a stored maximum power allowed for the terminal; and then supervising whether a value of the maximum power for the terminal is to be set; and setting the value of the maximum power for the terminal equal to the stored maximum power allowed for the terminal if the value of the maximum power for the terminal is to be set.

The instructions, when executed by the one or more processors, may further cause the apparatus to perform checking whether the second value of the maximum power is equal to a nominal maximum power allowed for the terminal; inhibiting, if the second value of the maximum power is equal to the nominal maximum power allowed for the terminal, at least one of the following after the terminal is configured with the second value of the maximum power: the monitoring whether the reception quality of the terminal is greater than the predefined threshold; or the calculating a third value of the maximum power if the reception quality of the terminal is greater than the predefined threshold; or the configuring the terminal with a third value of the maximum power.

The instructions, when executed by the one or more processors, may further cause the apparatus to perform calculating a fourth value of the maximum power by subtracting a predefined decrement from the first value of the maximum power if the reception quality of the terminal is less than the predefined threshold; configuring the terminal with the fourth value of the maximum power.

The instructions, when executed by the one or more processors, may further cause the apparatus to perform storing, if the fourth value of the maximum power is calculated, the fourth value of the maximum power as the stored maximum power allowed for the terminal.

The instructions, when executed by the one or more processors, may further cause the apparatus to perform inhibiting at least one of the following after the terminal is configured with the fourth value of the maximum power: the monitoring whether the reception quality of the terminal is greater than the predefined threshold; or the calculating a fifth value of the maximum power if the reception quality of the terminal is greater than the predefined threshold; or the configuring the terminal with the fifth value of the maximum power.

The instructions, when executed by the one or more processors, may further cause the apparatus to perform inhibiting at least one of the following if the terminal is configured to transmit with the first value of the uplink power being less than the first value of the maximum power allowed for the terminal: the monitoring whether the reception quality of the terminal is greater than the predefined threshold; or the calculating the second value of the maximum power and/or the calculating the fourth value of the maximum power; or the configuring the terminal with the second value of the maximum power and/or the configuring the terminal with the fourth value of the maximum power.

The instructions, when executed by the one or more processors, may further cause the apparatus to perform inhibiting the terminal from transmitting with a value of the uplink power different from the first value of the maximum power for the monitoring whether the reception quality of the terminal is greater than the predefined threshold.

The terminal may be configured for carrier aggregation or dual connectivity.

The terminal may be configured with a band combination, and the instructions, when executed by the one or more processors, may further cause the apparatus to perform checking if the band combination is marked, in a database, as susceptible to self-interference; inhibiting the configuring the terminal with the second value of the maximum power if the band combination is not marked as susceptible to self-interference.

According to a second aspect of the disclosure, there is provided a method comprising: checking whether a terminal being connected to a network is configured to transmit with a first value of an uplink power being equal to a first value of a maximum power, wherein the first value of the maximum power for the terminal is configured by the network, and the maximum power is an upper limitation of the uplink power; monitoring whether a reception quality of the terminal is greater than a predefined threshold if the terminal is configured to transmit with the first value of the uplink power being equal to the first value of the maximum power; calculating a second value of the maximum power by adding a predefined increment to the first value of the maximum power if the reception quality of the terminal is greater than the predefined threshold; and configuring the terminal with the second value of the maximum power if the reception quality of the terminal is greater than the predefined threshold.

The method may further comprise storing, if the second value of the maximum power is calculated, the second value of the maximum power as a stored maximum power allowed for the terminal; and then supervising whether a value of the maximum power for the terminal is to be set; setting the value of the maximum power for the terminal equal to the stored maximum power allowed for the terminal if the value of the maximum power for the terminal is to be set.

The method may further comprise checking whether the second value of the maximum power is equal to a nominal maximum power allowed for the terminal; inhibiting, if the second value of the maximum power is equal to the nominal maximum power allowed for the terminal, at least one of the following after the terminal is configured with the second value of the maximum power: the monitoring whether the reception quality of the terminal is greater than the predefined threshold; or the calculating a third value of the maximum power if the reception quality of the terminal is greater than the predefined threshold; or the configuring the terminal with a third value of the maximum power.

The method may further comprise calculating a fourth value of the maximum power by subtracting a predefined decrement from the first value of the maximum power if the reception quality of the terminal is less than the predefined threshold; and configuring the terminal with the fourth value of the maximum power.

The method may further comprise storing, if the fourth value of the maximum power is calculated, the fourth value of the maximum power as the stored maximum power allowed for the terminal.

The method may further comprise inhibiting at least one of the following after the terminal is configured with the fourth value of the maximum power: the monitoring whether the reception quality of the terminal is greater than the predefined threshold; or the calculating a fifth value of the maximum power if the reception quality of the terminal is greater than the predefined threshold; or the configuring the terminal with the fifth value of the maximum power.

The method may further comprise inhibiting at least one of the following if the terminal is configured to transmit with the first value of the uplink power being less than the first value of the maximum power allowed for the terminal: the monitoring whether the reception quality of the terminal is greater than the predefined threshold; or the calculating the second value of the maximum power and/or the calculating the fourth value of the maximum power; or the configuring the terminal with the second value of the maximum power and/or the configuring the terminal with the fourth value of the maximum power.

The method may further comprise inhibiting the terminal from transmitting with a value of the uplink power different from the first value of the maximum power for the monitoring whether the reception quality of the terminal is greater than the predefined threshold.

The terminal may be configured for carrier aggregation or dual connectivity.

The terminal may be configured with a band combination, and the method may further comprise checking if the band combination is marked, in a database, as susceptible to self-interference; inhibiting the configuring the terminal with the second value of the maximum power if the band combination is not marked as susceptible to self-interference.

The method may be a method of control of sensitivity degradation.

According to a third aspect of the disclosure, there is provided a computer program product comprising a set of instructions which, when executed on an apparatus, is configured to cause the apparatus to carry out the method according to the second aspect. The computer program product may be embodied as a computer-readable medium or directly loadable into a computer.

It is to be understood that any of the above modifications can be applied singly or in combination to the respective aspects to which they refer, unless they are explicitly stated as excluding alternatives.

## BRIEF DESCRIPTION OF THE DRAWINGS

Further details, features, objects, and advantages are apparent from the following detailed description of the preferred embodiments of the present invention which is to be taken in conjunction with the appended drawings, wherein:

Fig. 1 illustrates a system according to some example embodiments of the present disclosure;
Fig. 2 illustrates an example process according to some example embodiments of the present disclosure;
Fig. 3 illustrates an example process in a one UL component carrier scenario according to some example embodiments of the present disclosure;
Fig. 4 illustrates an example process for optimizing parameter $P\_\alpha$ in a one UL component carrier scenario according to some example embodiments of the present disclosure;
Fig. 5 illustrates an example process in a two UL component carriers scenario according to some example embodiments of the present disclosure;
Figs. 6A-6C illustrate example processes for optimizing parameter $P\_\alpha$ in a two UL component carriers scenario according to some example embodiments of the present disclosure;
Fig. 7 illustrates another example process according to an example embodiment of the present disclosure; and
Fig. 8 illustrates an apparatus according to an example embodiment of the present disclosure.

## DETAILED DESCRIPTION

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details. Moreover, it is to be understood that the apparatus is configured to perform the corresponding method, although in some cases only the apparatus or only the method are described.

UEs connecting using band combinations, such as when connecting using carrier aggregation or dual connectivity, may experience self-interference. In an example one uplink (UL) component carrier scenario, UL harmonics may cause self-interference in the other downlink (DL) component carrier, when the harmonic of the UL component carrier falls inside the other DL component carrier bandwidth. In another example one UL component carrier scenario, harmonic mixing may cause self-interference when a combination of the UL harmonic coincides with the DL harmonic of the other DL component. In still another example one UL component carrier scenario, a cross band may be an expression of self-interference when the output spectrum of the UL component carrier falls inside the DL component carrier bandwidth. Intermodulation distortion (IMD) is a type of self-interference that occurs in a two UL component carriers scenario when two UL component carriers intermodulate (mix) and the product of the mixing of the UL component carriers falls inside the receiver band of one or the other DL component carrier bandwidth. In some instances, a coefficient following IMD parameter, e.g., IMD2, IMD3, and so on, may be indicative of a harmonic order of the IMD self-interference.

For purposes of the present disclosure, each of the terms carrier aggregation and dual connectivity may be interpreted as including the others of these terms unless otherwise specified or made clear from the context. Likewise, each of the discussed example dual connectivity types, namely, EN-DC and NR-DC, is understood to include any kind (or type) of dual connectivity, unless otherwise stated or made clear from the context.

A range of output power of a given UE may be between a predefined minimum output power level and a predefined maximum output power level. In some instances, a maximum amount of power permitted to be output by a given UE may be determined by a power class of that UE (P_power class) and may be different when the UE operates in different operating bands. A parameter P_uplink may be indicative of a portion of the UE output power range used by the network to perform UE range management; a value of the parameter P_uplink may be within a range extending between the predefined minimum output power level and a maximum output power level P_max of the UE, where the parameter P_max is less than the parameter P_power class.

Managing self-interference may include reducing UE output power. Accordingly, the network may cause the UE to reduce the UE output power from the maximum output power P_max to an adjusted maximum output power level (denoted as parameter $P\_\alpha$, hereinafter). Thus, the parameter $P\_\alpha$ may be indicative of a reduced maximum output power set by the network for a specific UE within a cell of the network. In one example, a given value of the parameter $P\_\alpha$ may be determined to apply to the UE in response to the network configuring that UE with a particular band combination.

The connection quality between the network and the UE may degrade significantly if the UE reduces its own output power level to be less than a predefined threshold. Thus, telecommunication standards organizations provide guidelines and/or requirements related to a permissible level of output power reduction by the UE. To that end, values of a maximum power reduction (MPR) parameter for the UE may be indicative of a permissible reduction of maximum output power of the UE for a given combination of a modulation scheme, a resource block allocation, a carrier aggregation methodology, and/or a dual connectivity methodology.

Certain band combinations may be known to cause self-interference during carrier aggregation or dual connectivity and, thus, may be associated with a lower expected UE receiver sensitivity with respect to a reference sensitivity of that UE receiver. Telecommunication standards organizations provide guidelines and/or requirements related to a permissible level of receiver sensitivity relaxation of a given UE. For example, a maximum sensitivity degradation (MSD) parameter may be indicative of an agreed-upon and/or industry-accepted value of sensitivity relaxation of the UE receiver when the UE transmits in one of a dual connectivity operating mode or a carrier aggregation operating mode.

The agreed-upon categories (or types) of MSD may be based on a type of self-interference experienced by the UE that the MSD type addresses. Thus, a first MSD type may be associated with a UL harmonics self-interference. A second MSD type may be associated with a harmonic mixing self-interference. A third MSD type may be associated with a cross band self-interference. A fourth MSD type may be associated with an IMD self-interference. Of course, the MSD types are not limited to those explicitly provided herein. Other MSD types associated with other types of self-interferences or combinations thereof are also contemplated.

A given MSD type may be slightly more likely to occur during a given carrier aggregation or dual connectivity connection depending on whether the connection is a one UL component carrier connection or a two UL component carriers connection. For example, the first MSD type that addresses UL harmonics self-interference, the second MSD type that addresses harmonic mixing self-interference, and the third MSD type that addresses cross band self-interference may be more likely to occur in a UE connected using one UL component carrier. As another example, the fourth MSD type that addresses IMD self-interference may be more likely to occur in a UE connected using two UL component carriers.

For some UEs and band combinations, the industry-accepted MSD value defined by standardization organizations may be too large. When the industry-accepted value of the MSD parameter is greater than a threshold for one or more band combinations, e.g., MSD greater than 30 dB, a network may determine that making a carrier aggregation using those band combinations is undesirable or inefficient. For example, if a UE is close to the cell edge, the network may not configure the UE for carrier aggregation or dual connectivity, because the network assumes, based on the agreed-upon and/or industry-accepted MSD value, that the reception sensitivity of the UE is not sufficient if the UE transmits with a present maximum output power.

With steady improvements in the capability of the UE hardware, modern UEs may be capable of exhibiting greater than a threshold receiver sensitivity despite a predefined amount of self-interference in response to being configured for carrier aggregation or dual connectivity in a predefined band combination of a predefined cell(s). A given UE may be configured to signal (e.g., self-declare) to the network that the UE has receiver sensitivity capability that goes beyond the MSD values specified for a predefined band combination by one or more standardization organizations.

Upon being made aware of these additional capabilities, the network may configure the UE for carrier aggregation or dual connectivity band combinations that the network otherwise may not have used, thereby, resulting in a more efficient use of network resources and/or improved UE user experience. Thus, there is a strong desire to accommodate the network to use band combinations associated with the agreed-upon or industry-accepted MSD values, such as MSD values specified in a technical specification (TS) of the 3rd Generation Partnership Project (3GPP), when the UEs have capability to maintain receiver sensitivity greater than a threshold while transmitting at predefined maximum output power levels.

A network in accordance with the present disclosure configures the UEs for band combinations associated with MSD values while maintaining the reception quality of the UEs (e.g., by ensuring that the self-interference of the UE does not exceed a predefined self-interference threshold). Accordingly, the network may be configured to ensure a best carrier assignment with respect to reception quality capability of a given UE (including legacy UE types without MSD signaling) by determining the parameter $P_\alpha$ in runtime and optimizing the value of the parameter $P_\alpha$ for each registered UE that is a candidate to be configured with a band combination associated with an MSD value.

In some examples, the network in accordance with the present disclosure controls the MSD of the UE by gradually increasing a present maximum output power (for example, up to the power class-based maximum output power P_power class of the UE) based on measured reception quality of the UE. In this manner, the network in accordance with the present disclosure is configured to adapt the parameter $P_\alpha$ to manage and control MSD value-related UE receiver sensitivity relaxation to ensure efficient use of the licensed spectrum when providing carrier aggregation and/or dual connectivity connections.

In some instances, the parameter $P_\alpha$ may be based on the power class-based maximum output power P_power class of the UE, the predefined MSD value associated with the band combination (such as, for example, MSD value associated with the band combination specified in Tables 7.3A.4, 7.3A.5, and 7.3A.6 of 3GPP TS 38.101), and a value indicative of a relationship between the UL configuration and the MSD type (such as, for example, relationship between the UL configuration and the MSD type provided in Tables 7.3A.4, 7.3A.5, and 7.3A.6 of 3GPP TS 38.101). In one example, the parameter $P_\alpha$ may be defined as provided in Equation (1), such that

$$P\_\alpha = P\_power\_class - \frac{predefined\ MSD\ value}{relationship\ between\ UL\ config\ and\ MSD\ type} \qquad (1)$$

In other words, the parameter $P\_\alpha$ may be determined by subtracting, from the power class-based maximum output power P_power class, a quotient of the predefined MSD value associated with the band combination (e.g., the MSD value defined by 3GPP TS 38.101-1 and TS 38.101-3 or elsewhere and corresponding to a predefined band combination of interest) and a value indicative of a relationship between the UL configuration and the MSD type (e.g., UL to MSD type relationship found in 3GPP TS 38.101-1 and TS 38.101-3).

The relationship between the UL configuration and the MSD type may be indicative of a sensitivity degradation (MSD) that may occur in response to a predefined increase in UE output power when that UE is affected by a given self-interference type. For example, for a second order harmonic UL self-interference, a 1-dB increase in UE output power may result in MSD being 2 dB. Accordingly, for a third order harmonic UL self-interference, a 1-dB increase in UE output power may result in MSD being 3 dB and so on. As another example, the UL to the MSD type relationship for harmonic mixing self-interference may be such that a 1-dB increase in UE output power results in a predefined MSD value (where the predefined MSD value increases with an increase in the order of the harmonics that mix). As still another example, the UL to MSD type relationship for cross band self-interference may be a 1-dB increase in transmitter power that results in a predefined MSD value (where the predefined MSD value varies relative to a change in a distance from the transmitter spectrum in number of channel bandwidths). As yet another example, for IMD2 self-interference, the UL to MSD type relationship may be a 1-dB increase in transmitter power results in 2-dB MSD value.

With a predefined amount (e.g., x dB) of relaxation on the reference sensitivity requirement, the UE may meet the relaxed reference sensitivity requirement. Accordingly, an MSD value may correspond to a predefined decrease in a present maximum output power to a predefined value of the parameter $P\_\alpha$, resulting, in some cases, in the parameter $P\_\alpha$ being less than the power class-based maximum output power P_power class of the UE (i.e., $P\_\alpha$ < P_power class). A relationship between the UL present maximum output power of the UE, as defined for example by the parameter $P\_\alpha$, and the MSD (tolerated self-interference) may be determined using several ways including, but not limited to, calculations and/or simulations, a learning-based trial-and-error outcome-based optimization, and measured values of UE models.

The agreed-upon or industry-accepted MSD value (such as, MSD values in 3GPP TS 38.101-1 and 38.101-3) may be based on system considerations related to operation of the transmitter (aggressor) at the antenna of the UE (e.g., for a power class 3 UE, a power class-based maximum output power P_power class output by the UE transmitter may be 23 dBm). At this maximum output power, the UE is expected to experience a predefined level of self-interference based on a harmonic order of the transmission band and on the UE's own victim receiver band, thereby, preventing that UE from meeting the reference sensitivity requirement.

In an example carrier aggregation configuration for a power class 3 UE using CA_3-78 band combination, a second harmonic of the UL band 3 may be an aggressor to the DL band 78, the power class-based maximum output power P_power class of the UE may be 23 dBm, and the corresponding MSD value may be 23.9 dB. Since aggressor frequencies are in the second harmonic of the UL band, the UL to MSD type relationship may be defined as 2 dB. Accordingly, the parameter $P\_\alpha$ value determined in accordance with Equation (1) may be, such that

$$P\_\alpha = 23\ dBm - \frac{23.9\ dB}{2\ dB} = 23\ dBm - 11.95\ dB = {\sim}11\ dBm. \qquad (2)$$

The present maximum output power (as defined for example by the parameter $P\_\alpha$) may be indicative of the maximum output power that the UE is permitted to output at a given moment in time. A value of the present maximum output power may be determined as a smallest/least value of several maximum output power values. In one example, the parameter $P\_\alpha$ may be configured by the network and may, under certain circumstances, be the maximum output power P_max of the UE. Other definitions of the present maximum output power may be related to UE temperature compensation, UE modulation scheme compensation, UE channel bandwidth compensation, and so on. In some instances, the parameter $P\_\alpha$ is a smallest/least value of several possible values of the present maximum output power and, thus, may be said to "dominate" the maximum output power P_max. In these cases, P_max = $P\_\alpha$, i.e., a value of the parameter $P\_\alpha$ is the maximum output power that the UE may output without causing self-interference of that UE to exceed a predefined threshold.

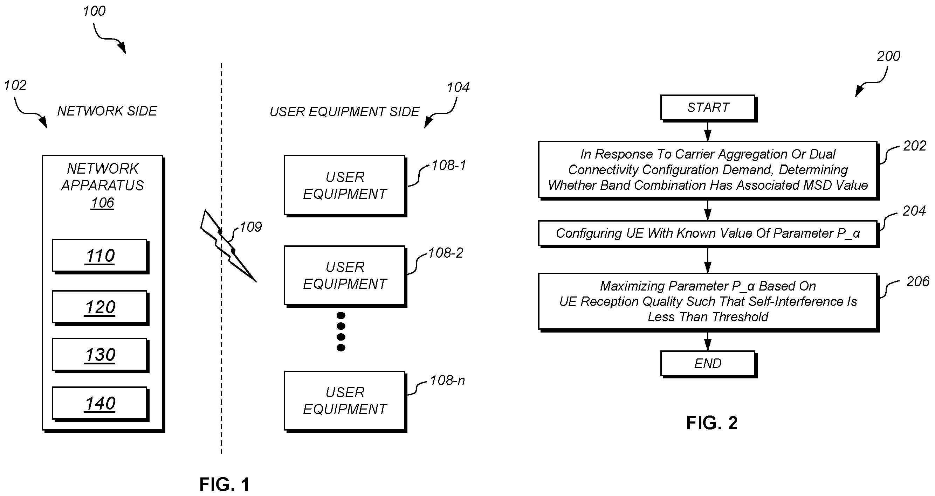

Fig. 1 illustrates an example system 100 configured to execute a network-managed control of sensitivity degradation in accordance with the present disclosure. The system 100 may include a network side 102 and a UE side 104. The network side 102 may include a network apparatus 106 having one or more network components (such as, but not limited to, a base station (gNB or eNB) and one or more controllers or processors configured to perform operations in accordance with the present disclosure). The UE side 104 may include a plurality of UEs 108-1, 108-2,... 108-*n* may be configured to establish communication with one or more controllers or other components of the network side 102. In one example, the network apparatus 106 and one or more of the plurality of UEs 108 may be configured to establish communication via a wireless connection 109, such as, but not limited to, a connection based on electromagnetic wave propagation.

The network apparatus 106 may include a means for checking 110, a means for monitoring 120, a means for calculating 130, and a means for configuring 140. The means for checking 110, the means for monitoring 120, the means for calculating 130, and means for configuring 140 may be a checking means, a monitoring means, a calculating means, and a configuring means, respectively. The means for checking 110, the means for monitoring 120, the means for calculating 130, and the means for configuring 140 may be a checker, a monitor, a calculator, and a configurator, respectively. The means for checking 110, the means for monitoring 120, the means for calculating 130, and the means for configuring 140 may be a checking processor, a monitoring processor, a calculating processor, and a configuring processor, respectively.

Fig. 2 illustrates an example implementation of an example process 200 executed by one or more processors of the network apparatus 106 in accordance with the present disclosure. As illustrated in block 202, the network apparatus 106 may be configured to grant a band combination configuration to the UE 108 based on, for example, current output power (UL) conditions of the UE 108 and/or based on a previously stored performance value of the UE, e.g., one or more UE performance values stored in memory accessed by the network apparatus 106. The network apparatus 106 may be configured to grant, to the UE 108, a band combination having an agreed-upon MSD value associated therewith (e.g., MSD values specified for the band combination in 3GPP TS 38.101-1 and TS 38.101-3).

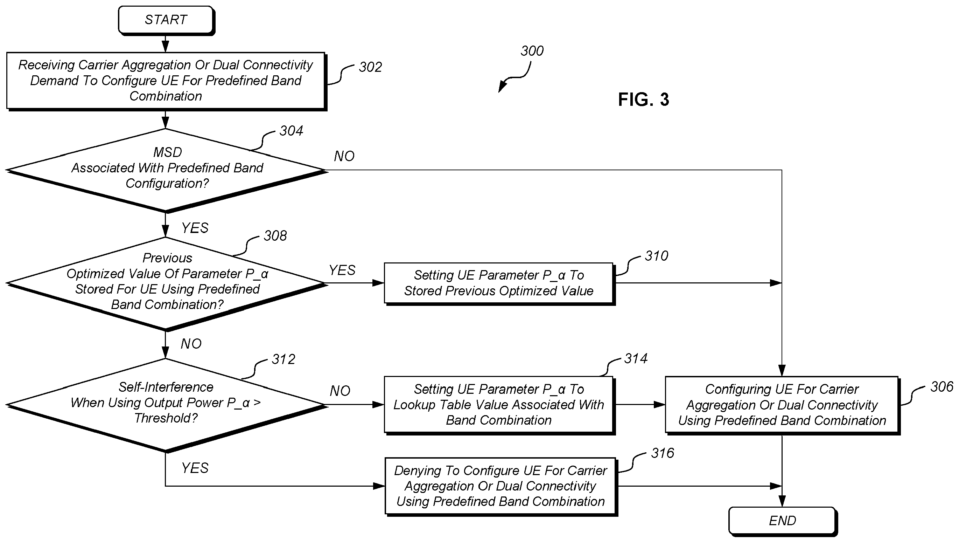

Alternatively, as described in reference to at least Fig. 3, in response to the network apparatus 106 being aware of an appropriate value of the parameter $P\_\alpha$ for the UE 108, e.g., based on a previously determined value of the parameter $P\_\alpha$ for that UE 108, the network apparatus 106 may be configured to, at block 204, grant a band combination to the UE 108 at the previously determined value of the parameter $P\_\alpha$ for this band combination. At block 206, the network apparatus 106 optimizes (maximizes) the value of the parameter $P\_\alpha$ in runtime based on reception quality, such that the reception quality of the UE 108 is greater than a predefined threshold. The network apparatus 106 may store the optimized value of the parameter $P\_\alpha$ for the UE 108 and the corresponding band combination and may use the stored optimized value of the parameter $P\_\alpha$ when subsequently granting the corresponding band combination to the UE 108.

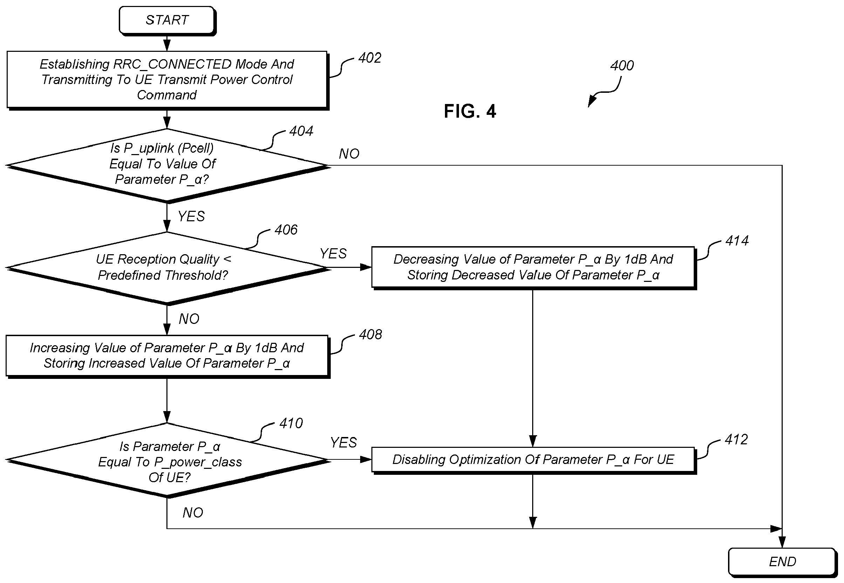

As described in reference to at least Fig. 4, the network apparatus 106 may be configured to, at block 206, execute a control loop to optimize (e.g., maximize) the parameter $P\_\alpha$ of a given UE 108. In one example, the network apparatus 106 may be configured to optimize the parameter $P\_\alpha$ for a given UE 108 by gradually allowing the UE 108 to transmit at a higher (greater or larger in magnitude) present maximum output power (e.g., if $P\_max = P\_\alpha$), in response to confirming that the self-interference experienced by the UE 108 at that value of the parameter $P\_\alpha$ does not exceed a predefined threshold.

Fig. 3 illustrates a process 300 executed by the network to configure a given UE capable of carrier aggregation and/or dual connectivity with a certain band combination and to select an initial value of the parameter $P\_\alpha$ for that band combination. One or more operations of the process 300 may be executed by one or more components of the system 100. In an example, the process 300 may be executed by one or more components of the network side 102, such as, but not limited to, the network apparatus 106. Accordingly, the process 300 may be initiated by the network apparatus 106, or one or more components thereof, in response to, for example, the network apparatus 106 receiving, at block 302, a demand (or request) to update a UE 108 for data throughput increase, which may be achieved through predefined carrier aggregation or dual connectivity band configuration.

Prior to granting a carrier aggregation or dual connectivity configuration, the network apparatus 106 identifies, at block 304, whether the predefined band combination has an associated MSD value. The network apparatus 106 may be configured to determine whether the UE 108 may be configured with the predefined band combination based on parameters such as, but not limited to, link level control, UE measurement reports, power headroom (PHR), or knowledge of the UE transmit power. In some instances, the parameter used may be selected such that the parameter may be indicative of the MSD of 3GPP TS 38.101-1 and TS 38.101-3.

In response to determining that no MSD value has been defined for the predefined band combination (i.e., the predefined band combination is not affected by self-interference), the network apparatus 106, at block 306, may configure the UE 108 for carrier aggregation or dual connectivity with the predefined band combination. The network apparatus 106 may then exit the process 300.

In response to determining that an MSD value is defined for the predefined band combination, the network apparatus 106, at block 308, determines whether a value of the parameter $P\_\alpha$ from a previous optimization is stored for the UE 108, e.g., stored in memory accessed by the network apparatus 106. In response to identifying that the value of the parameter $P\_\alpha$ from a previous optimization is stored, the network apparatus 106, at block 310, sets the parameter

$P\_\alpha$ of the UE 108 to the stored optimized parameter $P\_\alpha$ value. The network apparatus 106 may then, at block 306, configure the UE 108 for carrier aggregation with the predefined band combination and exit the process 300.

In response to determining that an optimized value of the parameter $P\_\alpha$ is not stored from a previous optimization for the UE 108, the network apparatus 106 may be configured to determine whether or not to grant the predefined band combination to the UE 108. In some instances, the network apparatus 106 may be configured to determine whether to grant the predefined band combination to the UE 108 by determining, at block 312, whether the UE 108 may experience self-interference greater than a threshold in response to being configured with the predefined band combination.

In response to determining that the UE 108 will not experience self-interference greater than a threshold in response to being configured with the predefined band combination, the network apparatus 106 is configured to, at block 314, configure the UE 108 with a maximum output power $P\_\alpha$ matching the MSD definition in the 3GPP specification (3GPP TS 38.101-1 and TS 38.101-3). The network apparatus 106 may then proceed to block 306 where the network apparatus 106 may grant the UE 108 the band combination configuration. In some examples, the network apparatus 106 may be configured to apply another predefined value of the parameter $P\_\alpha$ for the band combination, instead of applying value of the parameter $P\_\alpha$ according to the 3GPP specification.

In response to determining that the UE 108 may experience self-interference greater than a predefined threshold, the network apparatus 106 is configured to, at block 316, deny granting the band combination to the UE 108. The network apparatus 106 may then exit the process 300. In one example, prior to exiting the process 300, the network apparatus 106 may be configured to execute one or more operations of the process 300 for one or more band combinations different from the predefined band combination to identify a band combination such that the UE 108 will not experience self-interference greater than a threshold. In response to determining that another suitable band combination is not available, the network apparatus 106 does not configure the UE 108 for carrier aggregation. In some instances, in response to exiting the process 300, the network apparatus 106 may be configured to initiate a process 400 described in reference to Fig. 4.

Fig. 4 illustrates the process 400 executed by the network apparatus 106 to optimize the parameter $P\_\alpha$ of the UE 108 in a Radio Resource Control (RRC)_CONNECTED mode. In particular, the process 400 may include one or more operations for determining whether and how much to increase the parameter $P\_\alpha$. In the UE 108 in the RRC_CONNECTED mode with the network (e.g., a base station), the network apparatus 106 may be aware that the UE output power is less than a predefined threshold, (e.g., below the level of power that may cause self-interference of the UE 108 to be greater than a threshold preventing the UE 108 from meeting the predefined sensitivity requirement), as described in reference to at least Fig. 3.

In response to the output power of the UE 108 being less than the threshold power that may cause excessive level of self-interference, the network apparatus 106 may be configured to initiate managing the maximum output power of the UE 108 using the parameter $P\_\alpha$. For example, the network apparatus 106 may be configured to gradually allow the UE 108 to increase the present maximum output power $P\_{max}$ by updating the value of the parameter $P\_a$ (if the parameter $P\_\alpha$ dominates $P\_{max}$, i.e., $P\_{max} = P\_\alpha$) based on reception quality of the UE victim band. The network apparatus 106 may be configured to use one or more metrics to determine reception quality of the UE 108. Example metrics include, but are not limited to, reference signal received power (RSRP), reference signal received quality (RSRQ), signal over interference and noise ratio (SINR), channel quality indicator (CQI), link level quality, and any combination thereof. Accordingly, the network apparatus 106 causes the UE 108 to either reach a predefined output power level P, such that the UE 108 reception quality is greater than a threshold and results in an improved MSD compared to one or more lookup table MSD values (e.g., where the lookup table values may be MSD values from the 3GPP specification), or identify the MSD value corresponding to zero (0) (e.g., MSD=0).

The network apparatus 106 may be configured to initiate the process 400, at block 402, by initiating monitoring of output power of the UE 108. In one example, the network apparatus 106 may be configured to initiate monitoring of output power of the UE 108 by detecting the RRC_CONNECTED mode being active between the network (or the base station) and the UE 108 and transmitting, in RRC_CONNECTED mode, a transmit power control (TPC) command to the UE 108. At block 404, the network apparatus 106 determines whether to continue/start optimization of the parameter $P\_\alpha$. In an example, the network apparatus 106 determines whether the UE 108 is configured to transmit with an output power equal to a first predefined value of the parameter $P\_\alpha$. In response to determining that the UE 108 is not configured to transmit with an output power equal to the first predefined value of the parameter $P\_\alpha$ (e.g., because $P\_{max} < P\_\alpha$), the network apparatus 106 may be configured to exit the process 400 and the process 400 may then end. Put another way, in response to determining that the UE 108 is not configured to transmit with an output power equal to the first predefined value of the parameter $P\_\alpha$, the network apparatus 106 does not perform optimization of the value of the parameter $P\_\alpha$ and may be configured to wait to reinitiate the process 400 at a next output power check.

In response to determining that the UE 108 is configured to transmit with an output power equal to the first predefined value of the parameter $P\_\alpha$, the network apparatus 106 is configured to initiate or continue optimization of the parameter $P\_\alpha$. The UE 108 remains at maximum output power (current power level) $P\_{uplink} = P\_\alpha$ while the network apparatus 106 evaluates the reception quality. The network apparatus 106 may be configured to evaluate the reception quality of the UE 108 based on UE measurement reports and/or from DL behavior of the UE 108 measured by the network apparatus 106.

At block 406, the network apparatus 106 is configured to determine whether the reception quality at the UE 108 is less than a threshold. In response to determining that the reception quality is greater than a predefined threshold at maximum output power level P_uplink = P_$\alpha$, the network apparatus 106, at block 408, grants the UE 108 a 1-dB increase and stores the increased value of the parameter P_$\alpha$ in memory.

The network apparatus 106 may then proceed to block 410 where the network apparatus 106 determines whether the parameter P_$\alpha$ is equal to the power class maximum output power P_power class (MSD is zero). In response to determining that the parameter P_$\alpha$ is equal to the power class maximum output power P_power class, the network apparatus 106 may be configured to, at block 412, disable the optimization operations of the process 400 and may exit the process 400. The network apparatus 106 may record that the current value of the parameter P_$\alpha$ results in zero MSD (which has already been stored by the network apparatus 106) and may be configured to reuse the recorded current value of the parameter P_$\alpha$ when the same carrier aggregation configuration for the same UE 108 is required again.

In response to determining at block 410 that the value of the parameter P_$\alpha$ is not at P_power class, the network apparatus 106 may terminate the process 400. However, in some example embodiments, the network may be configured to perform further iterations of the process 400 in response to determining at block 410 that the value of the parameter P_$\alpha$ is not at P_power class, e.g., starting at block 404. In other words, the network apparatus 106 may start the power control loop of the process 400 once more, which may allow the UE 108 to increase the output power once more.

In response to determining, at block 406, that the reception quality is less than a predefined threshold when the UE 108 operates at the maximum output power level, the network apparatus 106 proceeds to block 414. Accordingly, in response to determining that the present maximum output power at the UE 108 (P_$\alpha$) causes self-interference greater than a threshold, the network apparatus 106, at block 414, decreases value of the parameter P_$\alpha$ by a predefined value, e.g., P_$\alpha$ - 1 dB, and stores this reduced/decreased value as the value of the parameter P_$\alpha$ associated with the particular UE 108 that may prevent the UE 108 from exceeding a predefined self-interference threshold.

The network apparatus 106 may mark the carrier aggregation for this UE 108 as being "MSD optimized" and may disable optimizing the parameter P_$\alpha$ using one or more operations of the process 400 for the particular UE 108. Put another way, following storing of the "MSD optimized" value of the parameter P_$\alpha$ for a given UE 108, the network apparatus 106 determines that the control loop of the process 400 may not need to be performed for this particular UE 108. Accordingly, the network apparatus 106 is configured to use the stored optimized value of the parameter P_$\alpha$ that serves this particular UE 108 for future connections that use the same band combination. As one example, instead of storing the optimized value of the parameter P_$\alpha$, the network apparatus 106 may store an MSD value, such as the MSD value derived from the 3GPP specification, corresponding to the parameter P_$\alpha$ and the type of self-interference associated with the MSD value. The network apparatus 106 may then exit the process 400 and the process 400 may end.

As shown in Fig. 4, in response to optimization of the parameter P_$\alpha$ being disabled for the UE 108, the network apparatus 106 may be configured to forego performing operations of the process 400, such as operations of the blocks 404-414. In some other example embodiments, the network apparatus 106 may be configured to perform the check of block 404 and/or the evaluation of the reception quality (e.g., block 406). If P_uplink (Pcell) is not equal to the value of parameter P_$\alpha$, the optimization procedure ends. Otherwise, if the UE 108 reception quality is larger than a predefined threshold, the value of parameter P_$\alpha$ increases by 1dB and the increased value of Parameter P_$\alpha$ will be stored.

The value of 1 dB in the block 408 is an example of an increment. Other predefined values are feasible, too. The value of the increment may be dependent on or independent from the value of the parameter P_$\alpha$. The value of 1 dB in the block 414 is an example of a decrement. Other predefined values are feasible, too. The value of the decrement may be dependent on or independent from the value of the parameter P_$\alpha$. The value of the decrement may be the same as the value of the increment or different therefrom. For example, if the value of the increment is larger than the value of the decrement, the optimization is more aggressive, and if the value of the increment is smaller than the value of the decrement, the optimization is more cautious than for a case where the value of the increment is equal to the value of the decrement.

In case of IMD self-interference, where two UL component carriers generate intermodulation products that fall inside a victim receiver band of the band combination, there will be two the parameter P_$\alpha$ values - one for each UL component carrier in the two operational bands with UL (P_$\alpha$1 and P_$\alpha$2). Each of them may be handled by the event triggering procedure (e.g., operations described in reference to process 200 and 300 of FIGS. 2 and 3, respectively) with configuration of P_$\alpha$1 and P_$\alpha$2 sent to the UE 108 and optimization procedure under RRC_CONNECTED mode (e.g., operations described in reference to processes 200 and 400 of Figs. 2 and 4, respectively) for both P_$\alpha$1 and P_$\alpha$2.

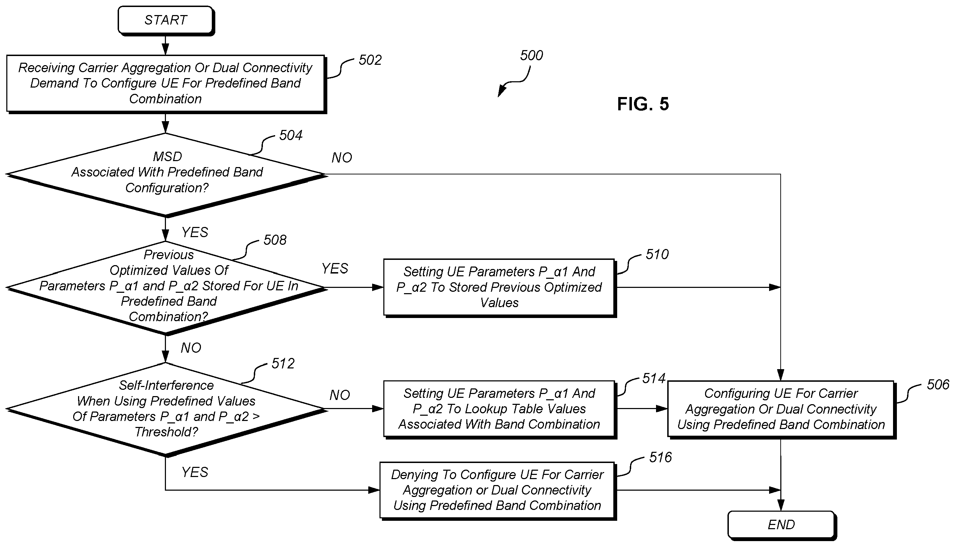

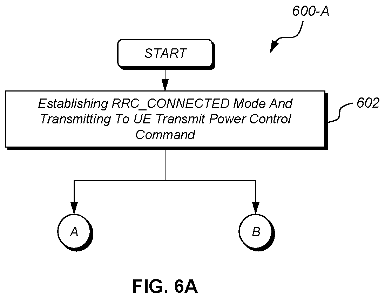

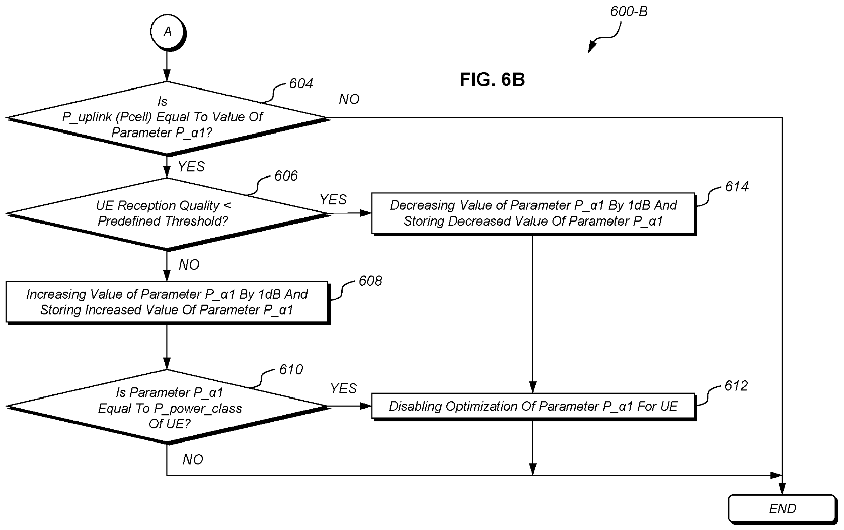

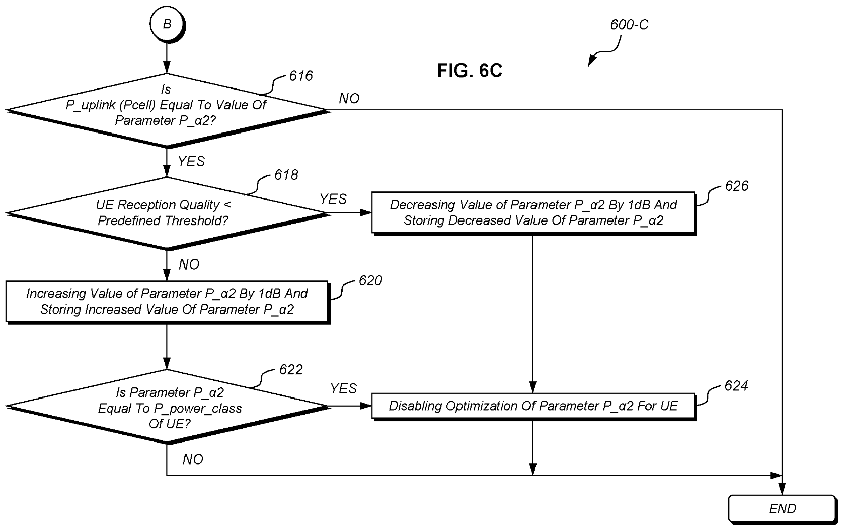

Fig. 5 and Fig. 6 illustrate the processes 500 and 600, respectively, for two UL component carriers that correspond to the processes 300 and 400 of Fig. 3 and Fig. 4, respectively. The procedures may be the same as for one UL component carrier except that, for this case, the network has two parameter P_$\alpha$ values, e.g., a value of a first UL carrier parameter P_$\alpha$1 and a value of a second UL carrier parameter P_$\alpha$2, for the same MSD type.

Fig. 5 illustrates the process 500 executed by one or more components of the network side 102 to determine whether the UE 108 may be configured for carrier aggregation or dual connectivity with a predefined band combination comprising two UL component carriers and the initial values of the first UL carrier parameter P_$\alpha$1 and the second UL carrier parameter P_$\alpha$2. The process 500 may be initiated by the network apparatus 106, or one or more components thereof, in response to, for example, the network apparatus 106 receiving, at block 502, a demand to update the UE 108 for data throughput increase, which may be achieved using a predefined CA/EN-DC/NR-DC band configuration. Prior to granting a carrier aggregation or dual connectivity configuration, the network apparatus 106 identifies, at block 504, whether the predefined band combination has an associated MSD value. In one example, the network apparatus 106 may be configured to reference a locally- or remotely-stored lookup table including a plurality of band combinations and the MSD values corresponding thereto.

The UE 108 may be configured for the predefined band combination based on one or more operating parameters. The example parameters for configuring the UE 108 for the predefined band combination may include, but are not limited to, link level control, UE measurement reports, PHR, or knowledge of the UE transmit power. In some instances, the selected parameter may be indicative of the MSD value defined by 3GPP TS 38.101-1 and/or TS 38.101-3.

As illustrated in Fig. 5, in response to determining that there is no MSD value defined for the band combination (i.e., the band combination is not affected by self-interference), the network apparatus 106, at block 506, may configure the UE 108 for carrier aggregation with the predefined band combination. The network apparatus 106 may then exit the process 500.

In response to determining that a MSD is defined for the band combination, the network apparatus 106, at block 508, determines whether values of P_$\alpha$1 and P_$\alpha$2 from a previous optimization are stored for the UE 108, e.g., in memory of the network apparatus 106. In response to identifying that the values of P_$\alpha$1 and P_$\alpha$2 from a previous optimization are stored, the network apparatus 106, at block 510, assigns the stored parameter values P_$\alpha$1 and P_$\alpha$2 to the UE 108. The network apparatus 106 may then configure, at block 506, the UE 108 for carrier aggregation with the band combination and exit the process 500.

In response to determining that the values of one or both of the first UL carrier parameter P_$\alpha$1 and the second UL carrier parameter P_$\alpha$2 are not stored from a previous optimization for the UE 108, the network apparatus 106 may be configured to determine whether or not to grant the predefined band combination comprising two UL carriers to the UE 108. In some instances, the network apparatus 106 may be configured to determine whether to grant the predefined band combination to the UE 108 based on a predefined criterion used for selecting the predefined band combination. In one example, the network apparatus 106 determines, at block 512, whether the UE 108 may experience self-interference greater than a threshold in response to being configured with the predefined band combination.

In response to determining that the UE 108 will not experience self-interference greater than threshold, the network apparatus 106 is configured to, at block 514, configure the UE 108 with a maximum output power (value of the first UL carrier parameter P_$\alpha$1 and value of the second UL carrier parameter P_$\alpha$2) corresponding to the MSD value in the lookup table (e.g., the MSD value in the 3GPP TS 38.101-1 and TS 38.101-3). The network apparatus 106 may then proceed to block 506 where the network apparatus 106 grants the UE 108 the predefined band combination configuration. In some examples, the network apparatus 106 may be configured to apply other predefined values of the first UL carrier parameter P_$\alpha$1 and the second UL carrier parameter P_$\alpha$2 for the predefined band combination different from the values of the first UL carrier parameter P_$\alpha$1 and the second UL carrier parameter P_$\alpha$2 defined according to the 3GPP specification.

In response to determining that the UE 108 may experience self-interference greater than a predefined threshold, the network apparatus 106 is configured to, at block 516, to deny granting the predefined band combination to the UE 108. The network apparatus 106 may then exit the process 500. In one example, prior to exiting the process 500, the network apparatus 106 executes one or more operations of the process 500 for one or more band combinations different from the predefined band combination to identify a band combination such that the UE 108 will not experience self-interference greater than a threshold. In response to failing to identify another band combination, the network apparatus 106 denies to configure the UE 108 for carrier aggregation. In some instances, in response to exiting the process 500, the network apparatus 106 may be configured to initiate a process 600-A, 600-B, and/or 600-C described in reference to Figs. 6A, 6B, and 6C, respectively.

Figs. 6A-6C illustrate the processes 600-A, 600-B, and 600-C executed by the network apparatus 106 to optimize values of each of the first UL carrier parameter P_$\alpha$1 and the second UL carrier parameter P_$\alpha$2 of the UE 108 in the RRC_CONNECTED mode. In particular, the processes 600-A, 600-B, and 600-C may include one or more operations for determining whether and how much to increase values of the first UL carrier parameter P_$\alpha$1 and the second UL carrier parameter P_$\alpha$2. For the UE 108 in the RRC_CONNECTED mode with the network (e.g., a base station), the network apparatus 106 may be aware that the output power of the UE 108 is less than a predefined threshold (e.g., below the level of power that may cause self-interference of the UE 108 to be greater than a threshold preventing the UE 108 from meeting the predefined sensitivity value), as described in reference to at least Fig. 5.

In response to the output power of the UE 108 being less than the threshold power that may cause self-interference of the UE to be greater than a threshold, the network apparatus 106 may be configured to initiate managing the maximum output power of the UE 108 using the first UL carrier parameter $P\_\alpha1$ and the second UL carrier parameter $P\_\alpha2$. For example, the network apparatus 106 may be configured to gradually allow the UE 108 to increase the present maximum output power P_max of each of the UL carriers (i.e., the first UL carrier present maximum output power P_max1 and the second UL carrier present maximum output power P_max2) by updating the first UL carrier parameter $P\_\alpha1$ and the second UL carrier parameter $P\_\alpha2$ (if the first UL carrier parameter $P\_\alpha1$ and the second UL carrier parameter $P\_\alpha2$ dominate P_max1 and P_max2, i.e., P_max1 = $P\_\alpha1$ and P_max2 = $P\_\alpha2$) based on reception quality of the victim band of the band combination. The network apparatus 106 may be configured to use one or more metrics to determine the reception quality of the UE 108. Example metrics include, but are not limited to, RSRP, RSRQ, SINR, CQI, link level quality, and any combination thereof. Accordingly, the network apparatus 106 causes the UE 108 either to reach a predefined output power level P, such that the UE 108 reception quality is greater than a threshold resulting in an improved value of MSD compared to that of one or more MSD lookup table values (e.g., where the MSD lookup table values may be MSD values from the 3GPP specification), or to identify the MSD value corresponding to zero (0) (e.g., MSD=0) for each of the UL carriers.

The network apparatus 106 may be configured to initiate the process 600-A, at block 602, by initiating monitoring of output power of the UE 108. In one example, the network apparatus 106 may be configured to initiate monitoring of output power of the UE 108 by transmitting, in the RRC_CONNECTED mode, the TPC command to the UE 108. The process 600-B and 600-C may include one of two sub-processes, a first sub-process for optimizing (maximizing) value of the first UL carrier parameter $P\_\alpha1$ and a second sub-process for optimizing (maximizing) value of the second UL carrier parameter $P\_\alpha2$. These sub-processes 600-B and 600-C may be executed simultaneously or sequentially.

In those instances where each of the sub-processes 600-B and 600-C is executed more than once and the sub-processes 600-B and 600-C are executed sequentially, in some cases, the sub-processes 600-B and 600-C may be executed alternately (e.g., a first iteration of one of the sub-processes 600-B and 600-C may be executed after a first iteration of another one of the sub-processes 600-B and 600-C and so on). In other words, after a first iteration of a sub-process 600-B to optimize the first UL carrier parameter $P\_\alpha1$, the sub-process 600-B waits for the sub-process 600-C for optimizing the second UL carrier parameter $P\_\alpha2$, and in response to completion of the sub-process 600-C, a next iteration of the sub-process 600-B may be executed.

From block 602, the network apparatus 106 may be configured to proceed to one of block 604 described in reference to sub-process 600-B and block 616 described in reference to sub-process 600-C. With reference to Fig. 6B, at block 604, the network apparatus 106 determines whether to continue/start optimization of the first UL carrier parameter $P\_\alpha1$. In an example, the network apparatus 106 determines whether the UE 108 is configured to transmit on the first UL carrier with an output power equal to the first UL carrier parameter $P\_\alpha1$. In response to determining that the UE 108 is not configured to transmit on the first UL carrier with an output power equal to the first UL carrier parameter $P\_\alpha1$ (e.g., because P_max1 < $P\_\alpha1$), the network apparatus 106 may be configured to exit the process 600-B and the process 600-B may then end. Put another way, in response to determining that the UE 108 is not configured to transmit on the first UL carrier with an output power equal to the first UL carrier parameter $P\_\alpha1$, the network apparatus 106 does not perform optimization of the value of the first UL carrier parameter $P\_\alpha1$ and may be configured to wait to execute another iteration of the process 600-B at a next output power check.

In response to determining that the UE 108 is configured to transmit on the first UL carrier with an output power equal to the first UL carrier parameter $P\_\alpha1$, the network apparatus 106 is configured to initiate or continue optimization of the first UL carrier parameter $P\_\alpha1$. The UE 108 remains for the first UL carrier at maximum output power (current power level) P_uplink = $P\_\alpha1$ while the network apparatus 106 evaluates the reception quality. The network apparatus 106 may be configured to evaluate the reception quality of the UE 108 based on UE measurement reports and/or based on UE DL behavior measured or otherwise detected by the network apparatus 106.

At block 606, the network apparatus 106 is configured to evaluate the reception quality at the UE 108. In response to determining that the reception quality is greater than a threshold when the UE 108 operates at maximum output power level P_uplink = $P\_\alpha1$ on the first UL carrier, the network apparatus 106, at block 608, grants the UE 108 a 1-dB increase for the first UL carrier and stores an increased value of the first UL carrier parameter $P\_\alpha1$ in memory.

The network apparatus 106 may then proceed to block 610 where the network apparatus 106 determines whether a value of the first UL carrier parameter $P\_\alpha1$ is equal to the power class maximum output power P_power class (corresponding to the power class associated with the UE 108) (MSD is zero). In response to determining that the first UL carrier parameter $P\_\alpha1$ is approximately equal to the power class maximum output power P_power class of the UE 108, the network apparatus 106 may be configured to stop the optimization operations of the process 600-B. The network apparatus 106 may record that the current value of the first UL carrier parameter $P\_\alpha1$ results in zero MSD (which has already been stored by the network apparatus 106) and may be configured to reuse the recorded current first UL carrier parameter $P\_\alpha1$ when the same carrier aggregation configuration for the same UE 108 is required again.

In response to determining that the first UL carrier parameter $P\_\alpha1$ is not approximately equal to the power class maximum output power P_power class, the network apparatus 106 may exit the process 600-B. However, in some example embodiments, the network may be configured to perform further iterations of the process 600-B in response to determining that the first UL carrier parameter $P\_\alpha1$ is not at the power class maximum output power P_power class, e.g., starting at block 604 for the first UL carrier. In other words, the network apparatus 106 may start the power control loop of the process 600-B once more for the first UL carrier parameter $P\_\alpha1$, which may allow the UE 108 to further increase the output power of the first UL carrier.

In response to determining that the reception quality is less than a threshold when the UE 108 operates at a maximum output power level for the first UL carrier $P\_\alpha1$, the network apparatus 106 proceeds to block 612. Accordingly, in response to determining that the present maximum output power at the UE 108 for the first UL carrier parameter $P\_\alpha1$ causes self-interference greater than a threshold, the network apparatus 106, at block 614, decreases a value of the first UL carrier parameter $P\_\alpha1$ by a predetermined value, e.g., $P\_\alpha1$ - 1 dB, and stores this decreased value of the first UL carrier parameter $P\_\alpha1$ as the value of the first UL carrier parameter $P\_\alpha1$ at which this particular UE 108 may operate without self-interference of the UE 108 being greater than a threshold.

Upon completion of the operation of the block 614, the network apparatus 106 may, at block 612, identify the carrier aggregation for this UE 108 as being "MSD optimized" and may disable optimizing a value of the first UL carrier parameter $P\_\alpha1$ for the particular UE 108. Put another way, following identifying the "MSD optimized" value for a given UE 108, the network apparatus 106 determines that the process 600-B may not need to be performed again for this particular UE 108. Accordingly, the network apparatus 106 is configured to use the stored optimized value of the first UL carrier parameter $P\_\alpha1$ that serves this particular UE 108 for future connections. Instead of the optimized value of the parameter $P\_\alpha1$, the network may store an MSD value, which may be derived, based on the 3GPP specification, from $P\_\alpha1$ and the type of MSD source (type of self-interference). The network apparatus 106 may then exit the control loop of the process 600-B and the process 600-B may end.

As shown in Fig. 6B, in response to the optimization of the first UL carrier parameter $P\_\alpha1$ being disabled for the UE 108, the network apparatus 106 may be configured to forego performing one or more operations of the process 600-B, e.g., operations of the blocks 604-614, for the first UL carrier. In some other example embodiments, the network apparatus 106 may be configured to perform operations of block 604 and/or the evaluation of the reception quality (e.g., block 606). If P_uplink (Pcell) is not equal to the value of parameter $P\_\alpha1$, the optimization procedure ends. Otherwise, if the UE 108 reception quality is larger than a predefined threshold, the value of parameter $P\_\alpha1$ increases by 1dB and the increased value of Parameter $P\_\alpha1$ will be stored.

The value of 1 dB in the block 608 is an example of an increment. Other predefined values are feasible, too. The value of the increment may be dependent on or independent from the value of the first UL carrier parameter $P\_\alpha1$. The value of 1 dB in the block 614 is an example of a decrement. Other predefined values are feasible, too. The value of the decrement may be dependent on or independent from the value of the first UL carrier parameter $P\_\alpha1$. The value of the decrement may be the same as the value of the increment or different therefrom. For example, if the value of the increment is larger than the value of the decrement, the optimization is more aggressive, and if the value of the increment is smaller than the value of the decrement, the optimization is more cautious than for a case where the value of the increment is equal to the value of the decrement.

With reference to Fig. 6C, at block 616, the network apparatus 106 determines whether to continue/start optimization of the second UL carrier parameter $P\_\alpha2$. In an example, the network apparatus 106 determines whether the UE 108 is configured to transmit on the second UL carrier with an output power equal to the second UL carrier parameter $P\_\alpha2$. In response to determining that the UE 108 is not configured to transmit on the second UL carrier with an output power equal to the second UL carrier parameter $P\_\alpha2$ (e.g., because P_max2 < $P\_\alpha2$), the network apparatus 106 may be configured to exit the process 600-C and the process 600-C may then end. Put another way, in response to determining that the UE 108 is not configured to transmit on the second UL carrier with an output power equal to the second UL carrier parameter $P\_\alpha2$, the network apparatus 106 does not perform optimization of the value of the second UL carrier parameter $P\_\alpha2$ and may be configured to wait to execute another iteration of the process 600-C at a next output power check.

In response to determining that the UE 108 is configured to transmit on the second UL carrier with an output power equal to the second UL carrier parameter $P\_\alpha2$, the network apparatus 106 is configured to initiate or continue optimization of the second UL carrier parameter $P\_\alpha2$. The UE 108 remains for the second UL carrier at maximum output power (current power level) P_uplink = $P\_\alpha2$ while the network apparatus 106 evaluates the reception quality. The network apparatus 106 may be configured to evaluate the reception quality of the UE 108 based on UE measurement reports and/or based on UE DL behavior measured or otherwise detected by the network apparatus 106.

At block 618, the network apparatus 106 is configured to evaluate the reception quality at the UE 108. In response to determining that the reception quality is greater than a threshold when the UE 108 operates at maximum output power level P_uplink = $P\_\alpha1$ on the second UL carrier, the network apparatus 106, at block 620, grants the UE 108 a 1-dB increase for the second UL carrier and stores the increased value of the second UL carrier parameter $P\_\alpha2$ in memory.

The network apparatus 106 may then proceed to block 622 where the network apparatus 106 determines whether a value of the second UL carrier parameter P_$\alpha$2 is equal to the power class maximum output power P_power class (corresponding to the power class associated with the UE 108) (MSD is zero). In response to determining that the second UL carrier parameter P_$\alpha$2 is approximately equal to the power class maximum output power P_power class of the UE 108, the network apparatus 106 may be configured to stop the optimization operations of the process 600-B. The network apparatus 106 may record that the current value of the second UL carrier parameter P_$\alpha$2 results in zero MSD (which has already been stored by the network apparatus 106) and may be configured to reuse the recorded current second UL carrier parameter P_$\alpha$2 when the same carrier aggregation configuration for the same UE 108 is required again.

In response to determining that the second UL carrier parameter P_$\alpha$2 is not approximately equal to the power class maximum output power P_power class, the network apparatus 106 may exit the process 600-C. However, in some example embodiments, the network apparatus 106 may be configured to perform further iterations of the process 600-C in response to determining that the second UL carrier parameter P_$\alpha$2 is not at the power class maximum output power P_power class, e.g., starting at block 616 for the second UL carrier. In other words, the network apparatus 106 may start the power control loop of the process 600-C once more for the second UL carrier parameter P_$\alpha$2, which may allow the UE 108 to further increase the output power of the second UL carrier.

In response to determining that the reception quality is less than a threshold when the UE 108 operates at a maximum output power level for the second UL carrier P_$\alpha$2, the network apparatus 106 proceeds to block 626. Accordingly, in response to determining that the present maximum output power at the UE 108 for the second UL carrier parameter P_$\alpha$2 causes self-interference greater than a threshold, the network apparatus 106, at block 626, decreases a value of the second UL carrier parameter P_$\alpha$2 by a predetermined value, e.g., P_$\alpha$2 - 1 dB, and stores this decreased value of the second UL carrier parameter P_$\alpha$2 as the value of the second UL carrier parameter P_$\alpha$2 at which this particular UE 108 may operate without self-interference of the UE 108 being greater than a threshold.

Upon completion of the operation of the block 626, the network apparatus 106 may, at block 624, identifies the carrier aggregation for this UE 108 as being "MSD optimized" and may disable optimizing a value of the second UL carrier parameter P_$\alpha$2 for the particular UE 108. Put another way, following identifying the "MSD optimized" value for a given UE 108, the network apparatus 106 determines that the process 600-C may not need to be performed again for this particular UE 108. Accordingly, the network apparatus 106 is configured to use the stored optimized value of the second UL carrier parameter P_$\alpha$2 that serves this particular UE 108 for future connections. Instead of the optimized value of the second UL carrier parameter P_$\alpha$2, the network apparatus 106 may store an MSD value, which may, for example, be derived from the 3GPP specification, based on the second UL carrier parameter P_$\alpha$1 and the MSD type (type of self-interference). The network apparatus 106 may then exit the control loop of the process 600-C and the process 600-C may end.

As shown in Fig. 6C, in response to the optimization of the second UL carrier parameter P_$\alpha$2 being disabled for the UE 108, the network apparatus 106 may be configured to forego performing one or more operations of the process 600-C, e.g., operations of the blocks 616-624, for the second UL carrier. In some other example embodiments, the network apparatus 106 may be configured to perform operations of block 616 and/or the evaluation of the reception quality (e.g., block 618). If P_uplink (Pcell) is not equal to the value of parameter P_$\alpha$2, the optimization procedure ends. Otherwise, if the UE 108 reception quality is larger than a predefined threshold, the value of parameter P_$\alpha$2 increases by 1dB and the increased value of Parameter P_$\alpha$2 will be stored.

The value of 1 dB in the block 620 is an example of an increment. Other predefined values are feasible, too. The value of the increment may be dependent on or independent from the value of the second UL carrier parameter P_$\alpha$2. The value of 1 dB in the block 626 is an example of a decrement. Other predefined values are feasible, too. The value of the decrement may be dependent on or independent from the value of the second UL carrier parameter P_$\alpha$2. The value of the decrement may be the same as the value of the increment or different therefrom. For example, if the value of the increment is larger than the value of the decrement, the optimization is more aggressive, and if the value of the increment is smaller than the value of the decrement, the optimization is more cautious than for a case where the value of the increment is equal to the value of the decrement.

Fig. 6 shows an example for an optimization of two UL carriers. However, the disclosure is not limited to one UL carrier or two UL carriers. The number of UL carriers may be arbitrary (e.g. three UL carriers, four UL carriers, and so on), and the processes 500 and 600A-6C of Figs. 5 and 6A-6C may be adapted in correspondence thereto.

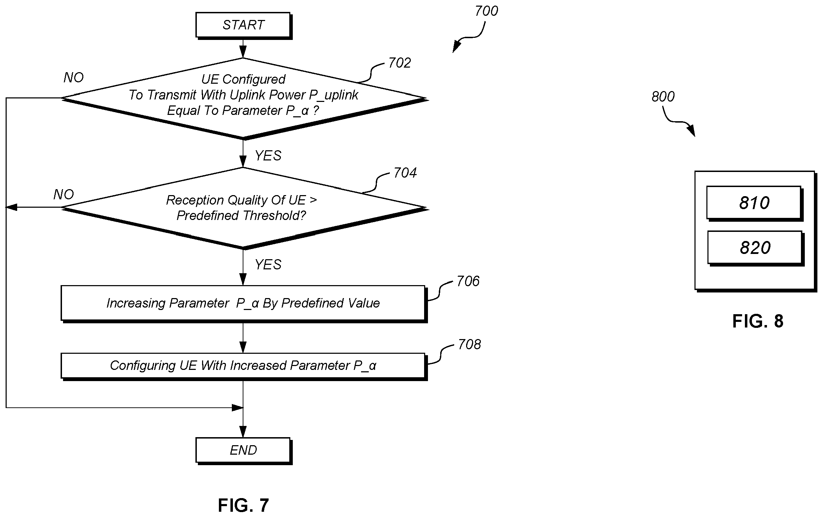

Fig. 7 illustrates an example process 700 in accordance with the present disclosure. In one example, the process 700 may be performed by the network apparatus 106, or one or more components thereof. In one example, the means for checking 110 of the network apparatus 106 may be configured to check, at block 702, whether a terminal is configured to transmit with a first value of an UL power being equal to a first value of a maximum power. The terminal is connected to a network. The first value of the maximum power is configured by the network to which the terminal is connected. The maximum power is an upper limitation of the UL power.

In response to determining that the terminal is configured to transmit with the first value of the UL power being equal to the first value of the maximum power allowed for the terminal (result of block 702 = yes), the means for monitoring 120 of the network apparatus 106 monitors, at block 704, whether a reception quality of the terminal is greater than a predefined threshold. In response to determining that the reception quality of the terminal is greater than the predefined threshold (result of block 704 = yes), the means for calculating 130 of the network apparatus 106 calculates, at block 706, a second (new) value of the maximum power by adding a predefined increment to the first value of the maximum power. The means for configuring 140 of the network apparatus 106 may then configure, at block 708, the terminal with the second value of the maximum power.

Fig. 8 shows an apparatus according to an example embodiment of the invention. The apparatus comprises at least one processor 810, at least one memory 820 storing instructions that, when executed by the at least one processor 810, cause the apparatus at least to perform the method according to Fig. 7 and related description.

Example reasons for self-interference of the UE include, but are not limited to, power amplifier-to-power amplifier (PA-PA) isolation causing IMD, duplexer attenuation, diplexer harmonic suppression, antenna isolation to receiver diversity, power amplifier printed circuit board isolation between modules, PA-PA isolation causing IMD between modules, antenna isolation suppressing transmitter aggressor, transceiver isolation, power amplifier harmonic response, antenna isolation of UL harmonics in victim receiver, and cross-band attenuation.

A dynamic approach for improving MSD capability may include a UE reporting present/existing MSD in response to a request by network and/or based on an independent decision by the UE. The dynamic approach focuses on optimization of a situation where MSD is occurring. A draw-back of the dynamic approach may be that the network signaling overhead supporting MSD determination either through network assistance, which could be dedicated measurement slots, or through other means consuming network capacity to support signaling and data exchange. In some examples, to obtain the improved MSD capability, UE measurements may be performed in the RRC_CONNECTED mode, network-assisted measurement slots may be provided for UE self-measurements, and network measurements in the RRC_CONNECTED mode may be performed.

A static approach for improving MSD capability includes a UE reporting an improved MSD capability (i.e., indicating that the UE has a lower MSD value than the predefined industry-accepted or agreed-upon MSD value for same operating conditions, such as, for example, MSD value specified in 3GPP TS 38.101-1 and TS 38.101-3). The network may be configured to obtain this information when the UE registers on a cell. The static approach may help the network to perform admission control, e.g., the network may be able to avoid a situation where the network does not configure a UE with a certain band combination having associated specified MSD value greater than a threshold.

A DL-centric version of the static approach includes UE reporting its MSD capability in a form of an improved MSD (measured during production test, simulation results, etc.) which may help the network to set more appropriate threshold for carrier aggregation configuration grant for the band combination. In some instances, to obtain the improved MSD capability, the UE pre-characterization (DL-centric) may be performed, simulated/calculated conservative improvements may be made, and/or measurements with conservative margin may be made.

A UL-centric version of the static approach includes In the UL-centric approach, the network uses a metric to estimate DL channel condition. The UL-centric approach may enable network to autonomously set a threshold in a more flexible way than DL-centric approach. Although the network finds and sets the access threshold dynamically, seen from UE to the network communication, the approach is static since there is no signaling between network and UE. To obtain the improved MSD capability, threshold based network configuration may be granted (UL-centric) and/or the network may configure dynamically, but the UE perceives the configuration statically.

The static DL-centric approach ensures the MSD value of the UE is known prior to the configuration of the band combination, which means the network may get the MSD value and based on the value determine if it may choose to configure the band combination, or if it finds the UE lacking the desired performance. The disadvantage of this approach may be in that the UE may determine the MSD conservatively, e.g., with many presumptions of what could impact the choice of MSD, thereby missing dBs of actual performance.

In some band combinations, multiple types of self-interference may occur. The types of self-interference may be present as well in one or more subsets of band combination configurations (component carrier combinations with less components, e.g., 4CA contains 3 different 2CA cases, each being potentially subject to one or more MSD types). This illustrates how difficult it may be for a UE to determine the MSD value up front as expected in the static DL-centric approach.

The dynamic approach ensures that the communication system relies on the MSD values determined based on measurements and/or signalling, which may result in more accurate values, thereby, leading to better performance than that of the static approach. The advantage of the dynamic approach may be limited if the network's use of the MSD value is limited to determining whether or not to configure a certain band combination. Operators and the network providers share a concern related to supporting procedures that occupy resources and consume network capacity in order to allow the UE to perform necessary self-measurements.

One of the advantages of the systems and methods of the present disclosure may be that the solution does not require any additional signaling between the network and the UE. Another advantage may be that the solution allows to adaptively grant the UE configuration for MSD-affected carrier aggregation or dual connectivity band combination to allow a well-defined carrier aggregation or dual connectivity configuration with a guaranteed reception performance. The solution may be advantageous since the systems and methods of the present disclosure works on UEs with MSD signaling and legacy UEs that may not be capable of providing MSD signaling.

Further advantages of the example embodiments of the present disclosure include relieving the UE from determining the MSD type and assisting the UE with maximum bandwidth capability, foregoing a need for the network to implement signalling that the UE needs to use to report to the network, foregoing signalling overhead and capacity waste that may be necessary for the UE to perform a network-assisted self-interference and/or MSD measurement. The solution captured in the example embodiments of the present disclosure is MSD type-agnostic thereby relieving the network from having to determine MSD for each type of self-interference and enabling the network to reuse the initially identified MSD value for the same UE models.

Some example embodiments are explained with respect to a fifth-generation (5G) communication network. However, the example embodiments of the present disclosure are not limited to thereto. The example embodiments of the present disclosure may be used in other communication networks, e.g., in previous or forthcoming generations of 3GPP communication networks, such as, but not limited, fourth generation (4G), sixth generation (6G), seventh generation (7G), and so on. The example embodiments of the present disclosure may be used in non-3GPP communication networks, such as non-3GPP communication networks that support carrier aggregation. The example embodiments of the present disclosure are not limited to being applied in a first frequency range, e.g., frequencies less 6 GHz or FR1, but, instead, may be applied to communication networks operating in any frequency range.

One piece of information may be transmitted in one or plural messages from one entity to another entity. Each of these messages may comprise further (different) pieces of information. Names of network elements, network functions, protocols, and methods are based on current standards. In other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, a means for service assurance or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

## Claims

1. Apparatus comprising:
   one or more processors, and memory storing instructions that, when executed by the one or more processors, cause the apparatus to perform:

   checking whether a terminal being connected to a network is configured to transmit with a first value of an uplink power being equal to a first value of a maximum power, wherein the first value of the maximum power for the terminal is configured by the network, and the maximum power is an upper limitation of the uplink power;

monitoring whether a reception quality of the terminal is greater than a predefined threshold if the terminal is configured to transmit with the first value of the uplink power being equal to the first value of the maximum power; calculating a second value of the maximum power by adding a predefined increment to the first value of the maximum power if the reception quality of the terminal is greater than the predefined threshold; configuring the terminal with the second value of the maximum power if the reception quality of the terminal is greater than the predefined threshold.

2. The apparatus according to claim 1, wherein the instructions, when executed by the one or more processors, further cause the apparatus to perform

storing, if the second value of the maximum power is calculated, the second value of the maximum power as a stored maximum power allowed for the terminal; and then supervising whether a value of the maximum power for the terminal is to be set; setting the value of the maximum power for the terminal equal to the stored maximum power allowed for the terminal if the value of the maximum power for the terminal is to be set.

3. The apparatus according to claim 2, wherein the instructions, when executed by the one or more processors, further cause the apparatus to perform

checking whether the second value of the maximum power is equal to a nominal maximum power allowed for the terminal; inhibiting, if the second value of the maximum power is equal to the nominal maximum power allowed for the terminal, at least one of the following after the terminal is configured with the second value of the maximum power:

the monitoring whether the reception quality of the terminal is greater than the predefined threshold; or the calculating a third value of the maximum power if the reception quality of the terminal is greater than the predefined threshold; or the configuring the terminal with a third value of the maximum power.

4. The apparatus according to any of claims 1 to 3, wherein the instructions, when executed by the one or more processors, further cause the apparatus to perform calculating a fourth value of the maximum power by subtracting a predefined decrement from the first value of the maximum power if the reception quality of the terminal is less than the predefined threshold; and configuring the terminal with the fourth value of the maximum power.

5. The apparatus according to claim 4 dependent directly or indirectly on claim 2, wherein the instructions, when executed by the one or more processors, further cause the apparatus to perform storing, if the fourth value of the maximum power is calculated, the fourth value of the maximum power as the stored maximum power allowed for the terminal.

6. The apparatus according to any of claims 4 to 5, wherein the instructions, when executed by the one or more processors, further cause the apparatus to perform inhibiting at least one of the following after the terminal is configured with the fourth value of the maximum power:

the monitoring whether the reception quality of the terminal is greater than the predefined threshold; or the calculating a fifth value of the maximum power if the reception quality of the terminal is greater than the predefined threshold; or the configuring the terminal with the fifth value of the maximum power.

7. The apparatus according to any of claims 1 to 6, wherein the instructions, when executed by the one or more processors, further cause the apparatus to perform inhibiting at least one of the following if the terminal is configured to transmit with the first value of the uplink power being less than the first value of the maximum power allowed for the terminal: the monitoring whether the reception quality of the terminal is greater than the predefined threshold; or the calculating the second value of the maximum power and, if dependent directly or indirectly on claim 4, the calculating the fourth value of the maximum power; or the configuring the terminal with the second value of the maximum power and, if dependent directly or indirectly on claim 4, the configuring the terminal with the fourth value of the maximum power.

8. The apparatus according to any of claims 1 to 7, wherein the instructions, when executed by the one or more processors, further cause the apparatus to perform

inhibiting the terminal from transmitting with a value of the uplink power different from the first value of the maximum power for the monitoring whether the reception quality of the terminal is greater than the predefined threshold.

9. The apparatus according to any of claims 1 to 8, wherein the terminal is configured for carrier aggregation or dual connectivity.

10. The apparatus according to claim 9, wherein the terminal is configured with a band combination, and the instructions, when executed by the one or more processors, further cause the apparatus to perform checking if the band combination is marked, in a database, as susceptible to self-interference;

inhibiting the configuring the terminal with the second value of the maximum power if the band combination is not marked as susceptible to self-interference.

11. Method comprising:

checking whether a terminal being connected to a network is configured to transmit with a first value of an uplink power being equal to a first value of a maximum power, wherein the first value of the maximum power for the terminal is configured by the network, and the maximum power is an upper limitation of the uplink power;

monitoring whether a reception quality of the terminal is greater than a predefined threshold if the terminal is configured to transmit with the first value of the uplink power being equal to the first value of the maximum power;

calculating a second value of the maximum power by adding a predefined increment to the first value of the maximum power if the reception quality of the terminal is greater than the predefined threshold;

configuring the terminal with the second value of the maximum power if the reception quality of the terminal is greater than the predefined threshold.

12. The method according to claim 11, further comprising

storing, if the second value of the maximum power is calculated, the second value of the maximum power as a stored maximum power allowed for the terminal; and then

supervising whether a value of the maximum power for the terminal is to be set;

setting the value of the maximum power for the terminal equal to the stored maximum power allowed for the terminal if the value of the maximum power for the terminal is to be set.

13. The method according to claim 12, further comprising

checking whether the second value of the maximum power is equal to a nominal maximum power allowed for the terminal;

inhibiting, if the second value of the maximum power is equal to the nominal maximum power allowed for the terminal, at least one of the following after the terminal is configured with the second value of the maximum power:

the monitoring whether the reception quality of the terminal is greater than the predefined threshold; or

the calculating a third value of the maximum power if the reception quality of the terminal is greater than the predefined threshold; or

the configuring the terminal with a third value of the maximum power.

14. A computer program product comprising a set of instructions which, when executed on an apparatus, is configured to cause the apparatus to carry out the method according to any of claims 11 to 13.

15. The computer program product according to claim 14, embodied as a computer-readable medium or directly loadable into a computer.

**FIG. 2**

200

202 — In Response To Carrier Aggregation Or Dual Connectivity Configuration Demand, Determining Whether Band Combination Has Associated MSD Value

204 — Configuring UE With Known Value Of Parameter P_α

206 — Maximizing Parameter P_α Based On UE Reception Quality Such That Self-Interference Is Less Than Threshold

START

END

**FIG. 1**

100

102

NETWORK SIDE

NETWORK APPARATUS 106

110

120

130

140

109

104

USER EQUIPMENT SIDE

108-1 USER EQUIPMENT

108-2 USER EQUIPMENT

108-n USER EQUIPMENT

18

EP 4 383 843 A1

**FIG. 3**

START

Receiving Carrier Aggregation Or Dual Connectivity Demand To Configure UE For Predefined Band Combination — 302

300

MSD Associated With Predefined Band Configuration? — 304

NO

YES

Previous Optimized Value Of Parameter P_α Stored For UE Using Predefined Band Combination? — 308

YES → Setting UE Parameter P_α To Stored Previous Optimized Value — 310

NO

Self-Interference When Using Output Power P_α > Threshold? — 312

NO → Setting UE Parameter P_α To Lookup Table Value Associated With Band Combination — 314

Configuring UE For Carrier Aggregation Or Dual Connectivity Using Predefined Band Combination — 306

YES → Denying To Configure UE For Carrier Aggregation Or Dual Connectivity Using Predefined Band Combination — 316

END

EP 4 383 843 A1

**FIG. 4**

400

START

Establishing RRC_CONNECTED Mode And Transmitting To UE Transmit Power Control Command — 402

Is P_uplink (Pcell) Equal To Value Of Parameter P_α? — 404 — NO

YES

UE Reception Quality < Predefined Threshold? — 406 — YES → Decreasing Value of Parameter P_α By 1dB And Storing Decreased Value Of Parameter P_α — 414

NO

Increasing Value of Parameter P_α By 1dB And Storing Increased Value Of Parameter P_α — 408

Is Parameter P_α Equal To P_power_class Of UE? — 410 — YES → Disabling Optimization Of Parameter P_α For UE — 412

NO

END

START

Receiving Carrier Aggregation Or Dual Connectivity Demand To Configure UE For Predefined Band Combination — 502

500

**FIG. 5**

MSD Associated With Predefined Band Configuration? — 504

NO

YES

Previous Optimized Values Of Parameters $P\_\alpha1$ and $P\_\alpha2$ Stored For UE In Predefined Band Combination? — 508

YES

Setting UE Parameters $P\_\alpha1$ And $P\_\alpha2$ To Stored Previous Optimized Values — 510

NO

Self-Interference When Using Predefined Values Of Parameters $P\_\alpha1$ and $P\_\alpha2$ > Threshold? — 512

NO

Setting UE Parameters $P\_\alpha1$ And $P\_\alpha2$ To Lookup Table Values Associated With Band Combination — 514

Configuring UE For Carrier Aggregation Or Dual Connectivity Using Predefined Band Combination — 506

YES

Denying To Configure UE For Carrier Aggregation or Dual Connectivity Using Predefined Band Combination — 516

END

EP 4 383 843 A1

**FIG. 6A**

A

600-B

**FIG. 6B**

604 — Is P_uplink (Pcell) Equal To Value Of Parameter P_α1?

— NO →

YES ↓

606 — UE Reception Quality < Predefined Threshold?

— YES → 614 — Decreasing Value of Parameter P_α1 By 1dB And Storing Decreased Value Of Parameter P_α1

NO ↓

608 — Increasing Value of Parameter P_α1 By 1dB And Storing Increased Value Of Parameter P_α1

610 — Is Parameter P_α1 Equal To P_power_class Of UE?

— YES → 612 — Disabling Optimization Of Parameter P_α1 For UE

NO

END

B

600-C

**FIG. 6C**

616

Is
P_uplink (Pcell) Equal To Value Of
Parameter P_α2?

NO

YES

618

UE Reception Quality <
Predefined Threshold?

YES

626

Decreasing Value of Parameter P_α2 By 1dB And
Storing Decreased Value Of Parameter P_α2

NO

620

Increasing Value of Parameter P_α2 By 1dB And
Storing Increased Value Of Parameter P_α2

622

Is Parameter P_α2
Equal To P_power_class
Of UE?

YES

624

Disabling Optimization Of Parameter P_α2 For UE

NO

END

FIG. 8

FIG. 7

Europäisches
Patentamt

European
Patent Office

Office européen
des brevets

# EUROPEAN SEARCH REPORT

Application Number

EP 23 21 1915

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 099 371 A (AFFILIATED HOSPITAL OF WEIFANG MEDICAL UNIV) 6 August 2019 (2019-08-06) * paragraph [0085] * ----- | 1-15 | INV. H04W52/24 H04W52/14 H04W52/36 |
| A | US 9 113 423 B2 (KAZMI MUHAMMAD [SE]; ERICSSON TELEFON AB L M [SE]) 18 August 2015 (2015-08-18) * claim 1 * ----- | 1,11,14 | |

TECHNICAL FIELDS
SEARCHED       (IPC)

H04W

The present search report has been drawn up for all claims

| Place of search | Date of completion of the search | Examiner |
|---|---|---|
| The Hague | 2 April 2024 | Lustrini, Donato |

EPO FORM 1503 03.82 (P04C01)

## ANNEX TO THE EUROPEAN SEARCH REPORT
## ON EUROPEAN PATENT APPLICATION NO.

EP 23 21 1915

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2024

| Patent document cited in search report | Publication date | Patent family member(s) | Publication date |
|---|---|---|---|
| CN 110099371 A | 06-08-2019 | NONE | |
| US 9113423 B2 | 18-08-2015 | NONE | |

EPO FORM P0459

For more details about this annex : see Official Journal of the European Patent Office, No. 12/82